Europäisches Patentamt

(19) European Patent Office

Office européen des brevets

(11) Numéro de publication: **0 236 371**
**B1**

(12) **FASCICULE DE BREVET EUROPEEN**

(45) Date de publication du fascicule du brevet: **25.04.90**

(21) Numéro de dépôt: **86905187.0**

(22) Date de dépôt: **18.09.86**

㊺ Numéro de dépót international:
PCT/CH86/00131

(87) Numéro de publication internationale:
**WO 87/01797 26.03.87 Gazette 87/07**

(51) Int. Cl.⁵: **G 01 B 3/18**

(54) **MICROMETRE A AFFICHAGE NUMERIQUE.**

(30) Priorité: **19.09.85 FR 8514038**

(43) Date de publication de la demande:
**16.09.87 Bulletin 87/38**

(45) Mention de la délivrance du brevet:
**25.04.90 Bulletin 90/17**

(84) Etats contractants désignés:
**AT BE CH DE FR GB IT LI LU NL SE**

(56) Documents cités:
**EP-A-0 037 196**
**BE-A-0 663 731**
**US-A-1 562 923**
**US-A-2 498 969**
**US-A-3 602 998**
**US-A-4 103 427**

(73) Titulaire: **GERARDIER, Jean-Pierre**
**CH-1411 Vaugondry (CH)**
(73) Titulaire: **GERARDIER, Raymond**
**CH-1411 Vaugondry (CH)**

(72) Inventeur: **GERARDIER, Jean-Pierre**
**CH-1411 Vaugondry (CH)**
Inventeur: **GERARDIER, Raymond**
**CH-1411 Vaugondry (CH)**

(74) Mandataire: **Nithardt, Roland**
**CABINET ROLAND NITHARDT Attn: Cabinet**
**MOSER & CIE Rue Edouard Verdan 15**
**CH-1400 Yverdon-les-Bains (CH)**

Courier Press, Leamington Spa, England.

## Description

La présente invention concerne un micromètre à affichage numérique comportant un corps contenant des organes de mesure et portant des moyens pour afficher les résultats de ces mesures, ce corps étant équipé d'une tête agencée pour recevoir une pièce de mesure adaptée pour mesurer soit des dimensions extérieures d'une surface, soit des dimensions intérieures d'une cavité ou d'un alésage, soit des profondeurs, comportant des moyens pour effectuer ces mesures en vraie grandeur et des moyens pour afficher une valeur correspondant à la dimension réelle de l'objet mesuré.

Les micromètres électroniques connus, tels que décrits par exemple dans le brevet US 4,103,427 et le brevet belge 663 731, sont du type Palmer et ne permettant généralement que d'effectuer un seul type de mesures, à savoir des mesures d'épaisseur de matière ou de diamètre d'un axe ou de longueur d'une pièce etc. . . Pour mesurer les dimensions extérieures d'une pièce, la profondeur et le diamètre intérieur d'un alésage, il est habituellement nécessaire de recourir à plusieurs appareils de mesure différents. En outre, ces appareils sont généralement conçus pour permettre d'effectuer des mesures dans une gamme de dimensions prédéterminée relativement restreinte, ce qui limite leur utilisation et oblige l'utilisateur à disposer d'un équipement encombrant et coûteux.

La présente invention se propose de pallier ces inconvénients en réalisant un micromètre universel à affichage numérique tel que mentionné précédemment qui permet une acquisition directe, par affichage numérique, de la valeur réelle des dimensions d'un objet, en autorisant des mesures de profondeur, de diamètre intérieur d'un alésage et de dimensions extérieures d'un pièce extrêmement précises, de l'ordre du micron et de rendre ces mesures particulièrement confortables et indéfiniment réitérables.

Dans ce but, le micromètre selon l'invention est caractérisé en ce que la pièce de mesure est amovible et interchangeable et comporte une surface d'appui et en ce que lesdits moyens pour effectuer les mesures en vraie grandeur comportent un marbre servant de surface de référence et conçu pour constituer un appui fixe pour ladite surface d'appui de la pièce de mesure amovible.

Selon un mode de réalisation préféré, ledit marbre comporte deux séries de stries respectivement parallèles à deux diamètres perpendiculaires entre eux.

Selon un mode de réalisation particulièrement avantageux, lesdits moyens comportent un dispositif de fixation du type à baïonnette pour fixer une pièce de mesure sur la tête de fixation solidaire du corps.

Ce mode de fixation nécessite un déplacement rotatif de la pièce de mesure sur le marbre, ce qui permet d'éliminer d'éventuelles poussières susceptibles de fausser les mesures.

Pour permettre la mise à zéro de l'appareil avant chaque mesure, lesdits moyens comportent de préférence un butée de calibrage solidaire d'un piston mobile, ce piston étant agencé pour repousser une tige de commande des palpeurs de mesure d'une pièce de mesure, et une butée de référence, ces deux butées étant positionnées de telle manière qu'elles déterminent avec une grande précision l'origine de tout déplacement du piston.

Selon un mode de réalisation particulièrement avantageux, la distance entre le marbre et la butée de référence est définie avec une précision de l'ordre du 1 μm.

Afin de permettre une lecture directe de valeurs mesurées, chaque pièce de mesure comporte un tige de commande dont l'extrémité est agencée pour entrer en contact avec une butée d'appui solidaire de l'extrémité libre du piston et positionnée à une distance déterminée de la butée de calibrage, lorsque la pièce de mesure est en place sur le marbre, cette distance étant définie pour chaque pièce de mesure de telle manière que le déplacement parcouru par le piston de sa position initiale définie par sa butée de calibrage à sa position finale corresponde exactement à la dimension à mesurer.

La butée de référence est de préférence mobile et est constituée par une goupille coulissant dans un manchon fixe portant un bouton de commande agencé pour amener cette goupille dans une position enfoncée dans laquelle elle sert d'appui à la butée de calibrage, un ressort de rappel tendant à la ramener dans sa position initiale.

Selon un mode de réalisation préféré, le piston est solidaire d'un chariot mobile lié à un mécanisme de commande à ressort, agencé pour engendrer le déplacement dudit chariot.

Le mécanisme de commande comporte de préférence une coulisse, un ressort de poussée agencé pour engendrer le déplacement de cette coulisse, une butée engagée dans un bloc solidaire d'un gâchette elle-même solidaire du chariot, en un mécanisme de frein agencé pour constituer un dispositif anti-recul.

Le mécanisme à frein comporte avantageusement une tige cylindrique pourvue d'un tronçon conique prolongé par un tronçon cylindrique de section rétrécie formant une gorge périphérique disposée en regard d'une série d'orifices sur la même génératrice d'un manchon entourant ladite tige cylindrique, ces orifices contenant des billes. La tige cylindrique peut être déplacée axialement à l'intérieur du manchon sous l'action d'un ressort verse une position dans laquelle les billes sont libres et dans le sens opposé par le chariot vers une position dans laquelle les billes sont bloquées par le tronçon conique.

Le piston mobile est de préférence prolongé par une tige filetée, cette tige étant associée à un mécanisme de commande à réserve de puissance, agencé pour déplacer axialement cette tige.

Ce mécanisme de commande à réserve de puissance comporte avantageusement un monteur électrique, un ressort à barillet, des organes mécaniques pour coupler ladite tige filetée audit moteur électrique par l'intermédiaire dudit ressort à barillet, des moyens pour armer ledit ressort et des moyens pour restituer à ladite tige filetée la puissance accumulée par ce ressort.

Selon une forme de réalisation préférée, les organes mécaniques pour coupler ladite tige filetée audit moteur, les moyens pour armer ledit ressort et les moyens pour restituer la puissance accumulée comportent un axe creux entraîné en rotation par une roue hélicoïdale qui engrène une vis sans fin solidaire de l'arbre d'entraînement du moteur, un tendeur coaxial à l'axe creux, une cage de barillet et un écrou rotatif vissé sur ladite tige filetée, ainsi qu'un entraîneur solidaire et coaxial à l'axe creux et agencé pour être rendu solidaire de la cage du ressort à barillet, ledit ressort étant fixé par une extrémité au tendeur et par son autre extrémité à l'entraîneur.

La présente invention sera mieux comprise en référence à la description d'un exemple de réalisation et du dessin annexé dans lequel:

La figure 1 représente une vue en plan d'une forme de réalisation préférée du micromètre selon l'invention,

La figure 2 représente une vue en plan et partiellement en coupe axiale d'une pièce de mesure agencée pour mesurer des diamètres intérieurs d'un alésage,

La figure 3 représente une pièce de mesure du type vernier agencée pour mesurer des dimensions extérieures,

La figure 4 représente une vue en coupe axiale du micromètre de la fig. 1,

La figure 5 représente une vue de face du micromètre selon la fig. 1,

La figure 6 représente une vue partielle en coupe d'une pièce de mesure destinée à mesurer des diamètres intérieurs tels que représentés par la fig. 2,

La figure 7 représente une vue en coupe axiale d'une autre forme de réalisation du micromètre selon l'invention,

La figure 8 représente une vue en coupe axiale agrandie d'un détail de l'appareil de la figure 7,

La figure 9 représente une vue en coupe transversale du micromètre de la figure 9 selon la ligne A—A de cette figure,

La figure 10 représente une vue en coupe axiale de l'organe d'accrochage d'une pièce de mesure, et

La figure 11 représente une vue agrandie de cet organe d'accrochage tourné de 90° autour de son axe par rapport à sa position dans la figure 10.

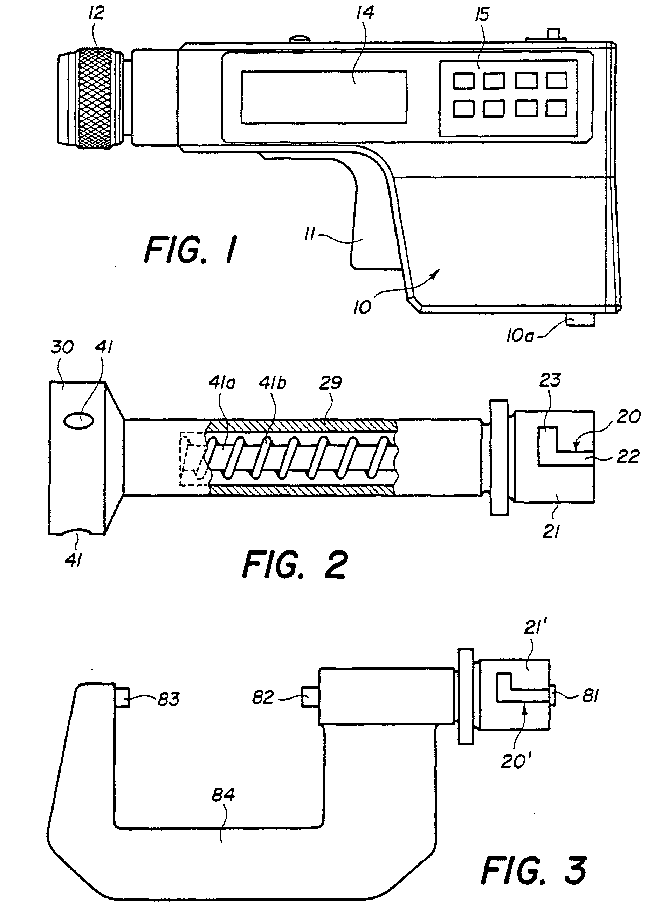

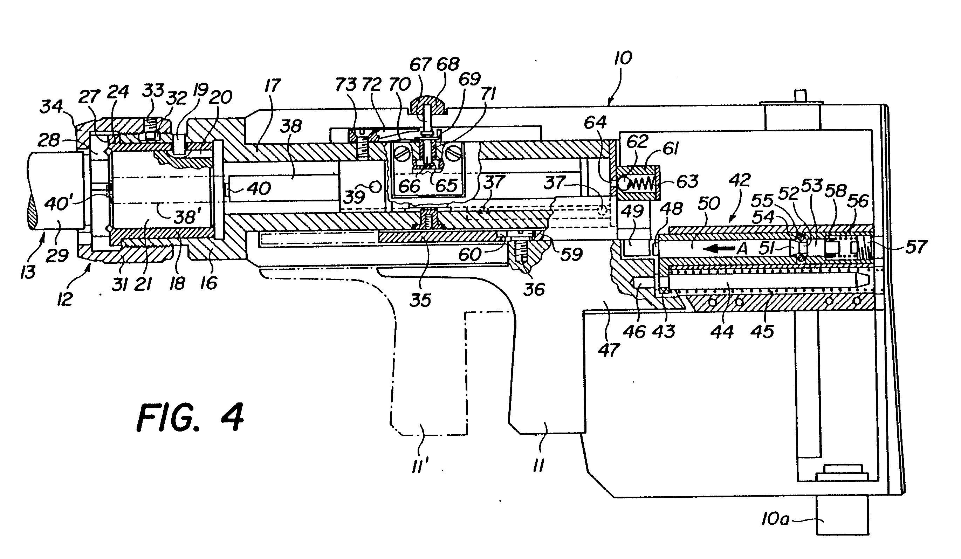

En référence aux figures, le micromètre, représenté respectivement en plan par la fig. 1 et partiellement en coupe axiale par la fig. 4, comporte un corps 10 en forme de pistolet, contenant l'ensemble des éléments mécaniques et électroniques permettant d'effectuer les mesures prévues, et équipé d'une gâchette de commande 11; d'une tête de fixation d'une pièce de mesure 13 destinée à mesurer des diamètres intérieurs d'une cavité ou d'un alésage, d'un écran d'affichage 14 et d'un bloc de touches de fonction 15. Parmi les touches de fonctions, nous noterons essentiellement la mise à zéro, la mémorisation du maximum et la conversion des valeurs métriques en pouces. La poignée revolver contient des piles ou des accumulateurs (non représentés). Une prise 10a permet le raccordement à une imprimante. Le circuit électronique (non représenté) est logé dans le corps de l'appareil, essentiellement dans la partie arrière de ce corps.

La tête de fixation 12 comprend essentiellement un élément cylindrique 16 disposé à l'extrémité d'un canon allongé 17. Cet élément et le canon sont de préférence réalisés en bronze et contiennent une douille intérieure 18 en acier ou en un autre matériau particulièrement dur. Cette douille est rendue solidaire de l'élément cylindrique 16 par chassage. La goupille fixe 19 traverse la douille intérieure 18 et s'engage dans un rainure 20 de la pièce de mesure 13 logée dans la tête de fixation 12. Cette goupille 19 fait office de prisonnier.

La pièce de mesure 13, représentée vue en plan par la fig. 2, comporte un embout cylindrique creux 21 pourvu de préférence d'une rainure 20 qui coopère avec la goupille 19 pour former une fixation du type à baïonnette. A cet effet, (voir fig. 2), la rainure 20 se compose d'un tronçon rectiligne 22 de direction axiale relié à son extrémité antérieure à un dégagement périphérique 23. La fixation de la pièce de mesure dans la douille intérieure 18 s'effectue de la manière suivante, l'opérateur engage l'embout cylindrique creux 21 dans la douille intérieure 18 de telle manière que le tronçon rectiligne 22 de la rainure 20 coïncide avec la goupille 19, puis fait subir à cet embout une légère rotation amenant la goupille dans le dégagement périphérique 23. Ce mouvement de rotation, assurant le couplage du type à baïonnette de l'embout cylindrique creux 21 dans la douille intérieure 18, a également une autre fonction qui sera décrite plus un détail ci-dessous.

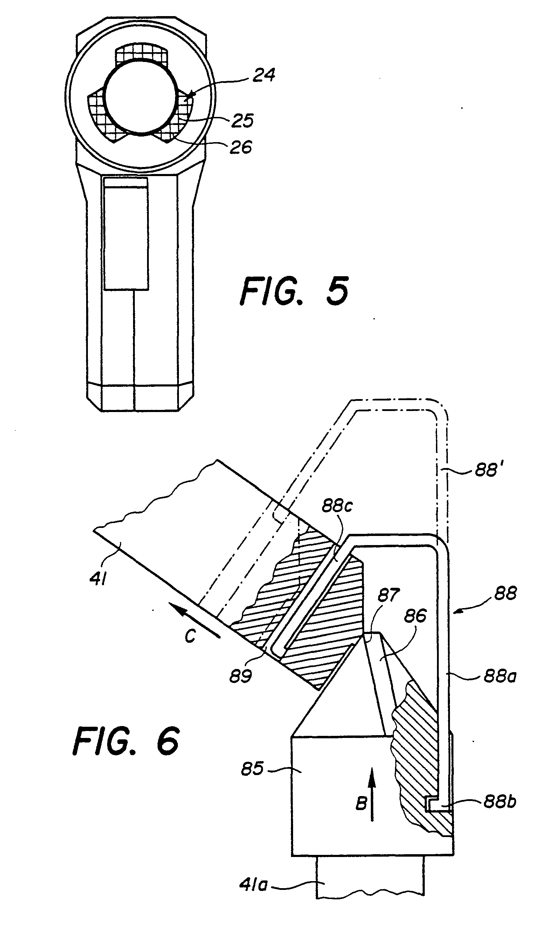

L'extrémité antérieure de la douille intérieure 18 définit un marbre 24 représenté par la vue frontale de la fig. 5. Ce marbre est réalisé en acier trempé ou en une quelconque autre surface particulièrement dure, et comporte deux séries de stries 25 et 26 qui sont respectivement parallèles à deux diamètres perpendiculaires entre eux. Ce marbre 24 sert de surface de référence à une surface d'appui 27 solidaire de la pièce de mesure 13. Les différentes stries ont pour but de permettre l'évacuation de fines particules ou poussières (qui seraient éventuellement susceptibles de fausser les mesures), au moment où le couplage du type à baïonnette provoque une rotation relative de la surface d'appui 27 sur le marbre 24. Cette surface d'appui 27 est en fait définie par trois ailettes 28 ménagées entre l'embout cylindrique creux 21 et une tige 29 portant une tête de mesure 30. Un écrou de serrage 31 est monté coaxialement à l'élément cylindrique 16 et à la douille intérieure 18. Une gorge 32 est ménagée sur une partie de la périphérie de l'élément cylindrique 16. Une goupille 33 solidaire de l'écrou 31 est engagée dans le gorge 32 pour en limiter la rotation lors du desserrage. L'extrémité antérieure de l'écrou est pourvue de trois oilettes 34 agencées pour être amenées en superposition sur les ailettes 28 de la pièce de mesure et pour assurer un blocage de cette dernière dans la tête de fixation 12, lorsque l'écrou de serrage est bloqué par une rotation provoquant son déplacement axial grâce à son filetage.

Le mécanisme de commande du micromètre comporte la gâchette 11 rendue solidaire d'un chariot coulissant 35 par l'intermédiaire d'une goupille 36. Ce chariot, représenté partiellement en traits pleins et partiellement en traits interrompus, coulisse sur des roulements de guidage 37 lorsque la gâchette passe de sa position 11′, représentée en traits mixtes, à sa position 11 représentée en traits pleins.

Le chariot 35 porte un piston 38 qui est lié à ce chariot par une goupille fixe 39 ou par tout autre moyen de liaison approprié. L'extrémité antérieure du piston porte un butée d'appui 40, agencée pour prendre appui sur une tige axiale 41a logée à l'intérieur de la pièce de mesure pour commander la sortie de palpeurs 41 (voir fig. 2) qui prennent appui contre les parois intérieures d'une cavité, par exemple de la surface cylindrique d'un alésage pour en mesurer le diamètre intérieur. Un ressort 41b entoure la tige 41a et la maintient dans sa position rétractée représentée par la figure 2. Le piston peut adopter une position rétractée 38 représentée en traits pleins ou une position de poussée 38′ représentée en traits mixtes. La butée d'appui 40 occupe alors la position 40′.

Le micromètre tel qu'il est représenté par les fig. 1 et 4, est par exemple prévu pour mesurer le diamètre intérieur d'un alésage. La pièce de mesure est insérée dans l'alésage jusque dans la zone de mesure. Lorsque cette zone est atteinte, l'opérateur doit provoquer la sortie des palpeurs rétractables 41 qui prennent appui en trois points sur la paroi intérieure de l'alésage dont on veut mesurer le diamètre. Le déplacement radial des palpeurs 41 est, comme cela sera décrit plus en détail par la suite, lié au déplacement d'une tige logée à l'intérieur de la pièce de mesure. Cette tige est elle-même poussée par le piston 38 qui est lié au chariot 35 dont le déplacement est commandé par un mécanisme de commande 42.

Ce mécanisme de commande se compose d'une coulisse 43 portant une tige centrale 44 de guidage d'un ressort de poussée 45. Cette tige de guidage est prolongée par un poussoir 46 qui s'engage dans un alésage approprié d'un bloc 47 solidaire de la gâchette 11. Le rôle du ressort de poussée 45 consiste à exercer une force de poussée sur le piston 38 par l'intermédiaire du chariot 35 afin de provoquer la sortie des palpeurs rétractables 41. La force d'appui agissant sur le chariot et par conséquent sur le piston s'exerce par l'intermédiaire du poussoir 46.

Ce mécanisme de commande est associé à un mécanisme de freinage ou de verrouillage en position comprenant une butée d'appui 48 agencée pour coopérer avec un bloc 49 solidaire de l'extrémité postérieure du chariot 35. La butée d'appui 48 est constituée par l'extrémité d'une tige 50 conçue pour coulisser à l'intérieur d'un alésage cylindrique ménagé dans la coulisse 43. Cette tige 50 comporte un tronçon conique 51 prolongé par un tronçon cylindrique 52 de section rétrécie, luimême prolongé par un tronçon 53 dont la section correspond à la section de la partie antérieure de la tige. Les deux tronçons 51 et 52 définissent une gorge périphérique disposée en regard d'une série d'orifices 54, situés sur une même génératrice, ménagés dans le corps de la coulisse 43 autour de la tige 50, et contenant des billes 55. Un ressort d'équilibrage 56, dont la force de poussée peut être réglée au moyen d'un capuchon 57 vissé à l'extrémité de l'alésage contenant la tige 50, prend appui sur une bague 58, appuyée sur un épaulement approprie ménagé à l'extrémité de la tige 50 et tend à pousser cette tige dans le sens de la flèche A. En l'absence d'autres contraintes, le ressort d'équilibrage 56 tend à pousser la tige 50 de telle manière que la butée d'appui 48 prenne appui sur la surface en regard du bloc 49.

Une des fonctions principales du mécanisme de frein consiste à maintenir les palpeurs momentanément dans leur position d'ouverture maximale. Accessoirement, ce mécanisme de frein facilite le centrage de l'appareil au moment de la mesure. Comme le montre la fig. 4, la goupille 36 est liée à un support 59 solidaire du chariot. Ce support est disposé dans un évidement 60 dont la dimension axiale est légèrement supérieure à celle du support 59 de telle manière que la gâchette 11, qui est rendue solidaire de la goupille 36, puisse se déplacer avec un certain jeu par rapport au chariot 35. Grâce à ce jeu, lorsque l'opérateur appuie sur la gâchette, le support 59 de la goupille 36 se déplace vers l'arrière de logement 60 pour rattraper ledit jeu avant d'entraîner le chariot 35 vers l'arrière. Dans cette position, le ressort de poussée 45 sollicite la coulisse 43 en appui contre le bloc 47 lié à la gâchette. Etant donné que le ressort d'équilibrage 56 repousse la tige 50 dans le sens de la flèche A, le mécanisme de frein à billes 55 est débloqué, ce qui permet le déplacement de la coulisse 43 dans le sens opposé à la direction indiquée par la flèche A et la compression du ressort de poussée 45.

Le mécanisme de frein n'intervient que si la poussée tendant à repousser le chariot dans le sens opposé à la flèche A est provoquée par une action sur les palpeurs, sans que l'opérateur agisse sur la gâchette. Cette dernière étant soumise à l'action du ressort de poussée 45, le support 59 se trouve en appui contre la face antérieure du dégagement 60. Dans ce cas, la butée 48 se trouve en appui contre le bloc 49 grâce à l'action du ressort 56. Tout déplacement du piston 38 résultant d'une action directe sur les palpeurs a tendance à provoquer un recul de la tige 50. Suit à ce recul, le tronçon conique 51 bloque les billes 55 dans la série d'orifices 54 ménagés dans l'alésage de la coulisse 43 de ladite tige 50, ce qui provoque le blocage de cette tige. En conséquence, ce mécanisme de frein constitue un dispositif anti-recul qui permet dans la pratique de faciliter le positionnement de l'instrument et de faciliter la recherche de la valeur maximale de la mesure.

La recherche du maximum et l'affichage de la valeur correspondante peuvent être obtenus par le circuit électronique. Dans ce cas, le mécanisme de frein ne présentera plus d'intérét pour cette fonction, mais conservera toute son utilité pour faciliter le travail de l'utilisateur en permettant de rendre plus aisée la recherche d'une position stable au cours de la mesure.

Un amortisseur pneumatique à fuites réglables, ménagé à l'extrémité de la cavite contenant le piston 38, comporte une chambre 61 contenant une soupape à bille 62 poussée par un ressort 63 contre une ouverture 64. Par le jeu des fuites, on peut amortir pneumatiquement les déplacements vers l'avant du piston 38.

Une autre caractéristique essentielle du micromètre décrit réside en l'existence d'une butée d'étalonnage 65 solidaire du piston 38. Cette butée d'étalonnage en métal dur coopère avec une butée mobile 66 montée sur le corps de l'appareil. La butée 66, constituée par une goupille cylindrique 67 portant un bouton de commande 68 à son extrémité supérieure et une rondelle annulaire 69 qui coopère avec un ressort à lame 70 tendant à repousser la goupille 67 vers le haut, est logée dans un manchon cylindrique 71, de telle manière qu'elle puisse coulisser dans ce manchon entre une position basse et une position haute. Dans la position basse, l'extrémité inférieure de la goupille 67 constitue une butée de référence 66 contre laquelle prend appui la butée d'étalonnage 65 permettant ainsi de définir avec précision la position initiale du piston 38. Un arrêt 72, fixé par une vis 73 au corps 17 de l'appareil, empêche la sortie accidentelle de la goupille 67.

Etant donné que la distance entre la butée de référence 66 et la surface de marbre 24 est parfaitement connue, on peut, grâce à ces deux éléments fondamentaux, définir un point zéro de la course du piston, quelle que soit la pièce de mesure adaptée sur le micromètre. La position de la tige contenue à l'intérieur de cette unité de mesure et dont l'extrémité coopère avec la butée 40 du piston 38 est définie de telle manière que le déplacement effectif du piston 38 à partir de la position zéro définie par les butées de référence 66 et d'étalonnage 65, soit compensé automatiquement pour que la valeur affichée sur l'écran correspond à la dimension réelle de la pièce mesurée. Grâe à ce système, on peut effectuer des lectures directes, sans recourir à des bagues de référence et sans effectuer un quelconque calcul de compensation, quelle que soit la pièce de mesure adaptée à l'extrémité du micromètre. Il en résulte un grand confort de mesure, bien que l'utilisateur soit très souvent amené à modifier la pièce de mesure étant donné que pour couvrir une gamme relativement large de valeurs, on est obligé de disposer d'une gamme très large de pièces de mesure dont chacune correspond à une zone de mesure bien déterminée. A titre d'exemple, les pièces de mesure conçues pour mesurer les diamètres d'alésage, qui permettent d'effectuer une mesure dont la précision est de l'ordre du micromètre, ont chacune une plage de mesure de 25 mm.

Dans la pratique, pour effectuer une mesure de diamètre d'un alésage, l'opérateur adapte le pièce de mesure dont la plage de mesure correspond au diamètre à mesurer. Il effectue ensuite l'étalonnage de l'appareil en appuyant sur la gâchette pour amener le piston dans la position qui permet la mise en place de la butée de référence 66, par appui sur le bouton de commande 68. Il relâche la gâchette pour amener la butée d'étalonnage 65 en appui contre la butée de référence 66 et appuie sur une touche de mise à zéro du circuit électronique et du disposifit d'affichage. Une nouvelle poussée sur la gâchette libère, sous l'effet du ressort 70, la goupille mobile 67. Le ressort 45 repousse alors la gâchette, le chariot et le piston dans leur position de travail. Le piston 38 agit sur la tige de commande des palpeurs jusqu'au moment où ceux-ci sont en contact avec la paroi intérieure de l'alesage. L'affichage de la dimension maximale s'effectue automatiquement par mémorisation de la valeur maximale. Le mécanisme de frein, qui agit comme un dispositif anti-recul, facilite la recherche du diamètre maximal.

La figure 3 illustre schématiquement une pièce de mesure permettant de mesurer les dimensions extérieures de pièces. Cette pièce comporte comme celle représentée par la fig. 2, un embout cylindrique creux 21' pourvu d'une rainure 20' formant une fixation du type à baïnnette. Une butée d'appui 81 disposée à l'extrémité d'une tige axiale (non représentée) est destinée à coopérer avec la butée 40 disposée à l'extrémité du piston 38 pour déplacer un palpeur 82. La mesure s'effectue entre une butée fixe 83 montée sur une branche du corps 84, en forme de U, de la pièce de mesure et le palpeur 82.

La figure 6 représente une vue partielle en coupe de la pièce de mesure de la fig. 2. L'extrémité de la tige 41a porte une tête conique 85 contre laquelle s'appuient trois palpeurs 41 disposés en étoile. La tête conique, par son déplacement axial dans le sens de la flèche B, provoque l'avance des palpeurs 41 dans le sens de la flèche C. Pour que ce déplacement puisse être effectué avec un minimum d'usure des surfaces en contact les unes avec les autres, la tête conique comporte trois fraisages plans 86 sur lesquels s'appuient respectivement trois tétons 87 également plans, qui constituent en fait les surfaces d'appui des palpeurs. Dans les systèmes conventionnels, les extrémités des palpeurs s'appuient sur la surface conique de la tête conique. Etant donné que la surface d'appui a des dimensions très réduites, quasiment assimilables à des points, l'usure est relativement rapide, ce qui a pour effet de fausser les mesures et de diminuer la précision de l'appareil. Le fait de disposer de surfaces d'appui planes de dimensions relativement grandes diminue considérablement l'usure.

Pour assurer le rappel des palpeurs 41, ces derniers sont reliés à la tête conique 85 respectivement par un ressort 88 dont une des branches 88a est accrochée par une griffe 88b logée dans une cavité appropriée de cette tête. Une autre branche 88c de ce ressort est engagée dans un alésage diamétral 89 ménagé en travers du palpeur.

Lorsque la tête conique 85 se déplace dans le sens de la flèche B, les palpeurs 41 se déplacent dans le sens de la flèche C. Au cours de ce déplacement le bras 88c du ressort se déplace vers une position 88' représentée en traits interrompus tout en maintenant la surface d'appui des tétons 87 contre les fraisages plans correspondants 86. Après la mesure, la tête conique 85 est retirée dans le sens opposé à la flèche B, ce qui a pour effet de permettre la rétraction des palpeurs. Cette retraction est obtenue grâce au rappel effectué par le bras 88c du ressort 88.

Le ressort 88 est représenté partiellement. Dans la pratique, il se compose d'une seule pièce comportant trois bras 88a pourvus chacun d'une griffe 88b et trois bras 88c logés chacun dans un alésage 89 d'un des palpeurs 41.

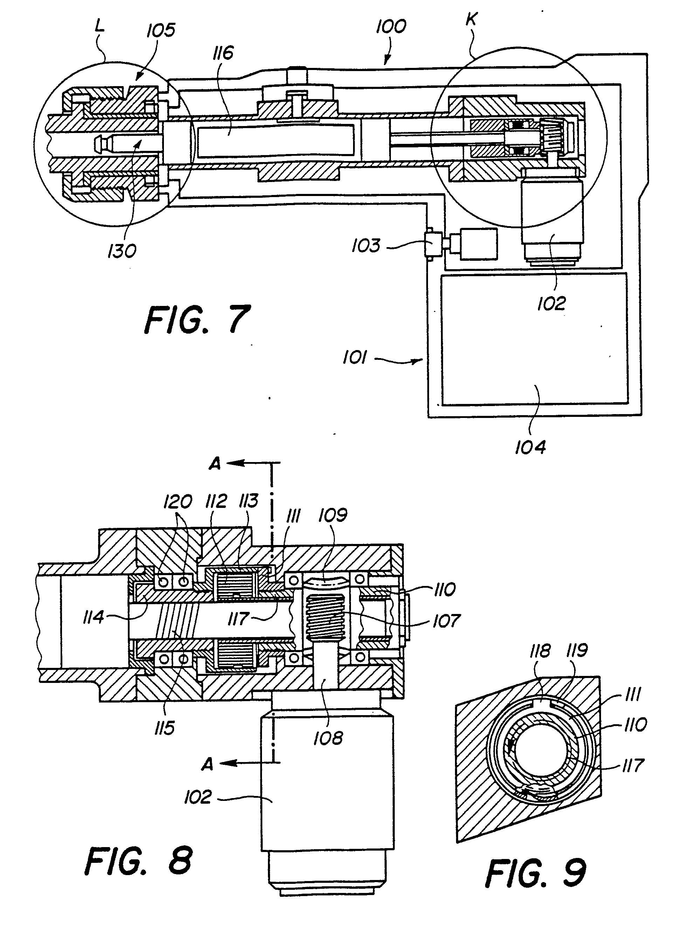

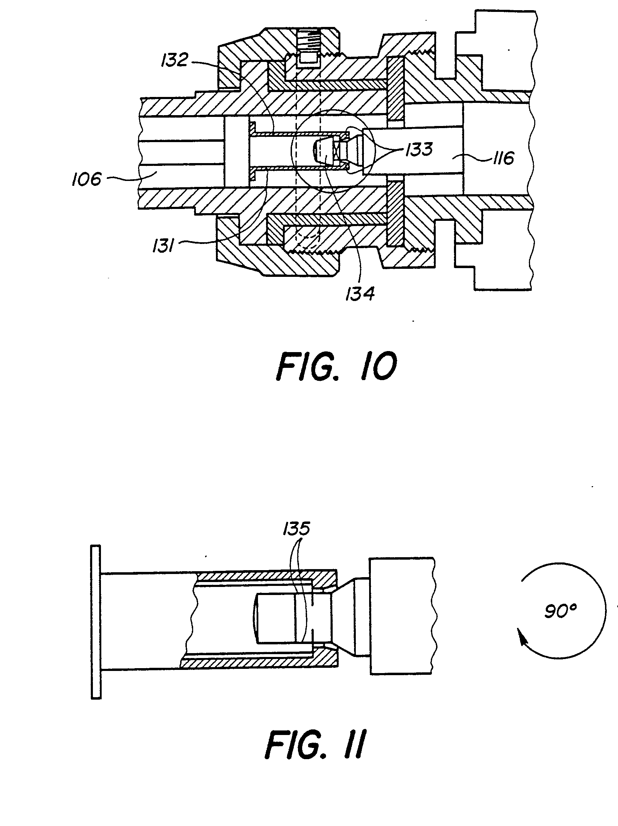

En référence à la figure 7, le micromètre représenté comporte comme précédemment un corps 100 en forme de pistolet, contenant l'ensemble des éléments mécaniques et électroniques nécessaires. Ce corps comporte une poignée 101 contenant un moteur électrique 102 et équipée d'un bouton de commande 103 couplé à des piles électriques ou des batteries logées dans une chambre 104 appropriée ménagée dans la poignée 101. A l'extrémité antérieure de ce corps est montée une tête 105 de fixation d'une pièce de mesure 106 (voir figure 10).

Le mécanisme de commande du micromètre est représenté plus en détail en référence à la figure 8 qui correspond à la partie entourée d'un cercle K sur la figure 7. Ce mécanisme comporte une vis sans fin 107 montée sur l'arbre d'entraînement 108 du moteur électrique 102, et qui engrène une roue hélicoîdale 109. Cette roue hélicoîdale 109 est solidaire d'un axe 110 sensiblement perpendiculaire à l'arbre d'entraînement 102. L'axe 110 porte un entraîneur 111 constitué par une pièce tubulaire à laquelle est accroché un ressort à barillet 112. La cage 113 du ressort à barillet 112 est directement fixée à un écrou 114 vissé sur une tige filetée 115 prolongeant le piston 116 (voir figure 7) identique au piston 38 décrit en référence à la figure 4.

La figure 9 montre les positions relatives de l'axe 110, de l'entraîneur 111 et d'un tendeur 117 qui est en fait un tronçon de tube solidaire de l'axe 110 et monté coaxialement par rapport à lui, et auquel s'accroche le ressort à barillet 112.

Lorsque l'opérateur veut effectuer une mesure, il actionne le bouton de commande 103, ce qui a pour effet d'entraîner l'axe 110, le tendeur 117 et l'entraîneur III. La cage du batillet est comenée en butée contre l'entraîneur qui comporte à cet effet un téton protubérant 118 engagé dans un évidement approprie 119 de la cage du barillet. La rotation de l'axe 110 entraîne en fin de compte la rotation de l'écrou 114 monte sur roulement à billes 120, ce qui a pour effet de déplacer axialement la tige filetée 114 à laquelle est fixé le piston 116.

Lorsque le piston, ou plus exactement les palpeurs rétractables 41, arrivent en butée de mesure, le moteur qui continue à tourner, entraîne l'une des extrémités du ressort à barillet, l'autre extrémité étant bloquée. Ceci a pour conséquence d'armer le ressort. Lorsque l'intensité du courant d'alimentation du moteur atteint un certain seuil prédéterminé le circuit électronique assure la coupure de cette alimentation. Le ressort étant armé, si le positionnement des palpeurs n'était à l'origine pas idéal, c'est-à-dire si la pièce de mesure n'était par parfaitement centrée, l'opérateur bouge légèrement le corps du micromètre, ci qui a pour effet de déplacer les palpeurs d'une faible distance, suffisante toutefois pour les amener, grâce à la force emmagasinée par le ressort, dans la position souhaitée. On a constaté, lors de trés nombreux essais, que les mesures pouvaient être effectuées par des opérateurs tout à fait inexpérimentés et que les résultats trouvés lors de nombreuses mesures effectuées par des personnes différentes étaient quaisment toujours identiques. Le mécanisme de commande est du type à réserve de puissance et permet une mesure précise dans n'importe quelle condition.

Dans l'exemple de réalisation illustré par la figure 6, le rappel des palpeurs s'effectue au moyen d'un ressort 88. Dans la variante illustrée par la figure 7, les palpeurs sont rappelés par un dispositif d'accrochage 130 qui est illustré par les figures 10 et 11 et décrit plus en detail en référence à ces figures. La figure 10 est une vue agrandie du contenu du cercle L de la figure 7. La pièce de mesure 106 est équipée d'une pièce 131 constituée par deux doigts 132 dont l'extrémité est équipée d'une protubérance 133. Le piston 116 est pourvu d'une tête protubérante 134 pourvue de deux surfaces plates parallèles 135 qui permettent à cette tête de s'engager ou de se retirer des deux doigts 132 après une rotation de 90° par rapport à la position illustrée par la figure 10. Cette position est représentée par la figure 11. Cette tête protubérante et cette pièce constituent des organes d'accouplement amovibles permettant un couplage entre le piston et la pièce de mesure. Le rappel de cette pièce étant ainsi assuré, les ressorts de rappel peuvent être supprimés.

**Revendications**

1. Micromètre à affichage numérique comportant un corps contenant des organes de mesure et portant des moyens pour afficher les résultats de ces mesures, ce corps étant équipé d'une tête agencée pour recevoir une pièce de mesure adaptée pour mesurer soit des des dimensions extérieures d'une surface, soit des dimensions intérieures d'une cavité ou d'un alésage, soit des profondeurs, comportant des moyens pour effectuer ces mesures en vraie grandeur et des moyens pour afficher une valeur correspondant à la dimension réelle de l'objet mesuré, caractérisé en ce que la pièce de mesure est amovible et interchangeable et comporte une surface d'appui (27) et en ce que lesdits moyens pour effectuer les mesures en vraie grandeur comportent un marbre (24) servant de surface de référence et conçu pour constituer un appui fixe pour ladite surface d'appui (27) de la pièce de mesure amovible.

2. Micromètre selon la revendication 1, caractérisé en ce que ledit marbre comporte deux séries de stries (25, 26) respectivement parallèles à deux diamètres perpendiculaires entre eux.

3. Micromètre selon la revendication 2, caractérisé en ce que lesdits moyens comportent un dispositif de fixation du type baïonnette pour fixer une pièce de mesure (13) sur une tête de fixation (12) solidaire du corps (10).

4. Micromètre selon la revendication 1, caractérisé en ce que lesdits moyens comportent une butée de calibrage (65) solidaire d'un piston mobile (38), ce piston étant agencé pour repousser une tige de commande des palpeurs de mesure d'une pièce de mesure (13), et une butée de référence (66), ces deux butées étant positionnées de telle manière qu'elles déterminent avec une grande précision l'origine de tout déplacement du piston.

5. Micromètre selon les revendications 2 et 4, caractérisé en ce que la distance entre le marbre (24) et la butée de référence (66) est définie avec une précision de l'ordre de 1 μm.

6. Micromètre selon la revendication 1, caractérisé en ce que chaque pièce de mesure comporte une tige de commande dont l'extrémité, agencée pour entrer en contact avec une butée d'appui (40) solidaire de l'extrémité libre du piston (28), est positionnée à une distance déterminée de la butée de calibrage (66) lorsque la pièce de mesure est en place sur le marbre (24), cette distance étant définie pour chaque pièce de mesure de telle manière que le déplacement parcouru par le piston de sa position initiale définie par sa butée de calibrage (65) à sa position finale, corresponde à la dimension à mesurer.

7. Micromètre selon la revendication 4, caractérisé en ce que la butée de référence (66) est mobile et est constituée par une goupille (67) coulissant dans un manchon fixe (69), portant un bouton de commande (68) agencé pour amener cette goupille dans une position enfoncée dans laquelle elle sert d'appui à la butée de calibrage (65), un ressort de rappel (70) tendant à la ramener dans sa position initiale.

8. Micromètre selon la revendication 4, caractérisé en ce que le piston (38) est solidaire d'un chariot mobile (35) lié à un mécanisme de commande à ressort, agencé pour engendrer le déplacement dudit chariot.

9. Micromètre selon la revendication 8, caractérisé en ce que le mécanisme de commande comporte une coulisse (43), un ressort de poussée (45) agencé pour engendrer le déplacement de cette coulisse, une butée (46) engagée dans un bloc (47) solidaire d'une gâchette (11) elle-même solidaire du chariot (35) et un mécanisme de frein (42) agencé pour constituer un dispositif anti-recul.

10. Micromètre selon la revendication 9, caractérisé en ce que le mécanisme à frein comporte une tige cylindrique (50) pourvue d'un tronçon conique (51) prolongé par un tronçon cylindrique (52) de section rétrécie, formant une gorge périphérique, disposée en regard d'une série d'orifices (54), d'un manchon entourant ladite tige cylindrique (50), ces orifices contenant des billes (55) et en ce que la tige cylindrique peut être déplacée axialement à l'intérieur du manchon sous l'action d'un ressort (56) vers une position dans laquelle les billes sont libres et dans le sens opposé par le chariot (35) vers une position dans laquelle les billes sont bloquees par le tronçon conique (51).

11. Micromètre selon la revendication 4, caractérisé en ce que le piston mobile (116) est prolongé par une tige filetée (115), cette tige étant associée à un mécanisme de commande à réserve de puissance, agence pour déplacer axialement cette tige.

12. Micromètre selon la revendication 11, caractérisé en ce que le mécanisme de commande à réserve de puissance comporte un moteur électrique (102), un ressort à barillet (112), des organes mécaniques pour coupler ladite tige filetée (115) audit moteur électrique par l'intermédiaire dudit ressort à barillet, des moyens pour armer ledit ressort et des moyens pour restituer à ladite tige filetée la puissance accumulée par ce ressort.

13. Micromètre selon la revendication 11, caractérisé en ce que les organes mecaniques pour coupler ladite tige filetée audit moteur, les moyens pour armer ledit ressort et les moyens pour restituer la puissance accumulée comportent un axe creux (110) entraîne en rotation par une roue hélicoîdale (109) qui engrène une vis sans fin (107) solidaire de l'arbre d'entraînement (108) du moteur (102), un tendeur (117) coaxial a l'axe creux, une cage de barillet (113) et un écrou rotatif (114) visse sur ladite tige filetée, ainsi qu'un entraîneur (111) solidaire et coaxial à l'axe creux et agencé pour être rendu solidaire de la cage du ressort à barillet, ledit ressort etant fixé par une extrémité au tendeur et par son autre extrémité à l'entraîneur.

**Patentansprüche**

1. Mikrometer mit numerischer Darstellung, bestehend aus einem Gehäuse, das Meßelemente aufnimmt und Einrichtungen trägt, um die Meßergebnisse anzuzeigen, wobei dieses Gehäuse mit einem Kupplungsanschluß versehen ist, der in der Lage ist, einen Meßkopf aufzunehmen, der so gestaltet ist, daß man entweder Außenabmessungen einer Fläche, oder Innenmaße einer Vertiefung oder einer Bohrung, oder Teifen messen kann, bestehend aus Einrichtungen zur Durchführung dieser Messungen in wahrer Größe und Einrichtungen zur Anzeige eines dem wirklichen Maß des gemessenen Gegenstandes entsprechenden Wertes, dadurch gekennzeichnet, daß der Meßkopf abnehmbar und austauschbar ist und eine Anschlußfläche (27) aufweist, und daß diese Einrichtungen zur Durchführung des Messungen in wahrer Größe einen Richtanschlag (24) aufweisen, der als Bezugsfläche dient und der so gestaltet ist, daß er eine unbewegliche Abstützung für die Anschlußfläche (27) des abnehmbaren Meßkopfes bildet.

2. Mikrometer nach Anspruch 1, dadurch gekennzeichnet, daß dieser Richtanschlag zwei Serien von Riefen (25, 26) aufweist, die jeweils parallel zu zwei senkrecht zueinander stehenden Durchmessern liegen.

3. Mikrometer nach Anspruch 2, dadurch gekennzeichnet, daß diese Einrichtungen eine bajonettartige Vorrichtung zur Befestigung eines Meßkopfes (13) an einen mit dem Gehäuse (10) verbundenen Kupplungsanschluß (12) aufweisen.

4. Mikrometer nach Anspruch 1, dadurch gekennzeichnet, daß diese Einrichtungen einen mit einem beweglichen Kolben (38) fest verbundenen Eichanschlag (65) aufweisen, wobei dieser Kolben dazu dient, einen Steuerstift für Meßtaster eines Meßkopfes (13) zurückzuschieben, und einen Vergleichsanschlag (66), wobei diese zwei Anschläge so angeordnet sind, daß sie mit großer Genauigkeit den Ausgangspunkt für jegliche Kolbenverschiebung bestimmen.

5. Mikrometer nach den Ansprüchen 2 und 4, dadurch gekennzeichnet, daß der Abstand zwischen dem Richtanschlag (24) und dem Vergleichsanschlag (66) mit einer Genauigkeit in der Größenordnung von 1 μm definiert ist.

6. Mikrometer nach Anspruch 1, dadurch gekennzeichnet, daß jeder Meßkopf einer Steuerstift aufweist, dessen Ende, das so gestaltet ist, daß es mit einem fest mit dem freien Ende des Kolbens (38) verbundenen Berührgungsanschlag (40) in Kontakt kommen kann, in einem bestimmten Abstand zum Eichanschlag (65) liegt, wenn der Meßkopf auf dem Richtanschlag (24) aufliegt, wobei dieser Abstand für jeden Meßkopf so definiert ist, daß die vom Kolben ausgeführte Verschiebung von seiner durch seinen Eichanschlag (65) definierten Ausgangslage bis zu seiner Endlage der zu messenden Dimension entspricht.

7. Mikrometer nach Anspruch 4, dadurch gekennzeichnet, daß der Vergleichsanschlag (66) beweglich ist und aus einem in einer feststehenden Buchse (69) gleitenden Stift (67) besteht, der einen Betätigungsknopf (68) trägt, um diesen Stift eindrücken zu können, in welcher Stellung er dann als Abstützung für den Eichanschlag (65) dient, während eine Rückstellfeder (70) versucht, ihn in seine Ausgangslage zurückzubringen.

8. Mikrometer nach Anspruch 4, dadurch gekennzeichnet, daß der Kolben (38) an einem beweglichen Schlitten (35) befestigt ist, der an einen mit Feder versehenen Betätigungsmechanismus für die Verschiebung dieses Schlittens angeschlossen ist.

9. Mikrometer nach Anspruch 8, dadurch gekennzeichnet, daß der Betätigungsmechanismus folgendes aufweist: eine Kulisse (43), eine Druckfeder (45), die dazu dient, die Kulisse zu verschieben, einen Stift (46), der in einen mit einem Drücker (11) verbundenen Ansatz (47) hineinragt, wobei der Drücker selbst fest mit dem Schlitten (35) verbunden ist, und eine Bremseinrichtung (42), die als Rücklaufbremsvorrichtung dient.

10. Mikrometer nach Anspruch 9, dadurch gekennzeichnet, daß die Bremseinrichtung folgendes aufweist: einen zylindrischen Stift (50), an dem sich ein konischer (51) und anschließend ein zylindrischer (52) abschnitt mit kleinerem Querschnitt befindet, woraus sich eine Umfangsrille ergibt, die einer Serie von Öffnungen (54) in einer diesen zylindrischen Stift (50) umgebenden Buchse gegenüberliegt, wobei diese Öffnungen Kugeln (55) enthalten, und daß der zylindrische Stift im Innern der Buchse unter Einwirkung einer Feder (56) axial verschiebbar ist, und zwar in eine Lage, in welcher die Kugeln frei sind und durch den Schlitten (35) im entgegengesetzten Sinn in eine Lage, in welcher die Kugeln durch den konischen Abschnitt (51) blockiert sind.

11. Mikrometer nach Anspruch 4, dadurch gekennzeichnet, daß der bewegliche Kolben (116) durch eine mit Außengewinde versehene Spindel (115) verlängert ist, wobei diese Spindel zu einem Betätigungsmechanismus mit Energieüberschüß gehört, der dazu dient, diese Spindel axial zu verschieben.

12. Mikrometer nach Anspruch 11, dadurch gekennzeichnet, daß der Betätigungsmechanismus mit Energieüberschuß folgendes aufweist: einen Elektromotor (102), eine gekapselte Feder (112), mechanische Elemente, um die mit Außengewinde versehene Spindel (115) mittels dieser gekapselten Feder mit dem Elektromotor zu verbinden, Einrichtungen, um diese Feder zu spannen, und Einrichtungen, um die von der Feder aufgespeicherte Energie auf die mit Gewinde versehene Spindel zu übertragen.

13. Mikrometer nach Anspruch 11, dadurch gekennzeichnet, daß die mechanischen Elemente zur Verbindung der mit Außengewinde versehenen Spindel mit dem Motor, die Einrichtungen zum Spannen der Feder, und dioe Einrichtungen zum Übertragen der aufgespeicherten Energie, folgendes aufweisen: eine hohle Achse (110), die von einer Schnecke (107) über ein Schneckenrad (109) in Drehung versetzbar ist, wobei die Schnecke fest mit der Antriebswelle (108) des Motors (102) verbunden ist, eine zur hohlen Achse koaxiale Spannhülse (117), ein Federgehäuse (113), und eine drehbare Mutter (114), die auf die mit Gewinde versehene Spindel geschraubt ist, sowie einen koaxial zur hohlen Achse liegenden und mit dieser fest verbundenen Mitnehmer (111), der so ausgeführt ist, daß man ihn mit dem Federgehäuse fest verbinden kann, wobei das eine Ende der Feder an der Spannhülse und das andere Ende am Mitnehmer befestigt ist.

## Claims

1. Micrometer with digital readout including a body containing measuring components and carrying means for displaying the results of the measurements, this body being equipped with a head arranged to receive a measuring piece adapted for the measurement of either the outer dimensions of a surface, or of the inner dimensions of a cavity or a bore, or of depths, including means for effecting these measurements in natural size and means for displaying a value corresponding to the real dimension of the measured object, characterized in that the measuring piece is removable and interchangeable and comprises a support surface and in that said means for effecting the measurements in natural size comprise a surface plate serving as a reference surface designed to constitute a fixed support for said support surface of the removable measuring piece.

2. Micrometer according to claim 1, characterized in that said surface plate comprises two series of serrations (25, 26) respectively parallel to two mutually perpendicular diameters.

3. Micrometer according to claim 2, characterized in that said means comprise a fastening device of the bayonet type for fastening a measuring piece (13) to a fixing head (12) solid with the body (10).

4. Micrometer according to claim 1, characterized in that said means comprise a calibrating stop (65) solid with a mobile piston (38), this piston being adapted to push back a drive rod of the measuring feelers of a measuring piece (13), and a reference stop (66), these two stops being positioned in such a manner that they determine with great precision the origin of any displacement of the piston.

5. Micrometer according to claim 2 and 4, characterized in that the distance between the surface plate (24) and the reference stop (66) is defined with a precision of the order of 1 micron.

6. Micrometer according to claim 1, characterized in that each measuring piece includes a drive rod having an end which is adapted to come into contact with a bearing stop (40) solid with the free end of the piston (28) and is positioned at a determined distance from the calibrating stop (66), when the measuring piece is in place on the surface plate (24), this distance being defined for each measuring piece in such a manner that the displacement effected by the piston from its initial position defined by its calibrating stop (65) to its final position, corresponds to the dimension to be measured.

7. Micrometer according to claim 4, characterized in that the reference stop (66) is mobile and consists of a pin (67) sliding in a fixed sleeve (69), carrying a control button (68) adapted to bring this pin into a depressed position in which it serves as a support for the calibrating stop (65), a return spring (70) tending to bring it back into its initial position.

8. Micrometer according to claim 4, characterized in that the piston (38) is solid with a mobile carriage (35) connected to a spring drive mechanism adapted to produce the displacement of said slide.

9. Micrometer according to claim 8, characterized in that the drive mechanism includes a slide (43), a pressure spring (45) adapted to produce the displacement of this slide, a stop (46) engaged in a block (47) solid with a trigger (11) itself solid with the carriage (35) and a brake mechanism (42) adapted to constitute an antirecoil device.

10. Micrometer according to claim 9, characterized in that the brake mechanism includes a cylindrical rod (50) provided with a conical section (51) extended by a cylindrical section (52) of constricted cross-section, forming a peripheral groove, disposed facing a series of orifices (54), of a sleeve surrounding said cylindrical rod (50), these orifices containing small balls (55) and in that the cylindrical rod may be axially displaced within the sleeve due to the action of a spring (56) towards a position wherein the balls are free and in the opposite direction by the carriage (35) towards a position wherein the balls are locked by the conical section (51).

11. Micrometer according to claim 4, characterized in that the mobile piston (116) is extended by a threaded rod (115), this rod being associated with a drive mechanism with power reserve, adapted to axially displace this rod.

12. Micrometer according to claim 11, characterized in that the drive mechanism with power reserve includes an electric motor (102), a barrel spring (112), mechanical means for coupling said threaded rod (115) to said electric motor via said barrel spring, means for loading said spring and means for restituting to said threaded rod the power stored by this spring.

13. Micrometer according to claim 11, characterized in that the mechanical means for coupling said threaded rod with said motor, the means for loading said spring and the means for restituting the stored power comprise a hollow spindle (110) rotatably driven by a helicoidal wheel (109) which meshes with an endless screw (107) solid with the drive shaft (108) of the motor (102), and adjuster (117) coaxial with the hollow spindle a barrel housing (113) and a rotary nut (114) screwed onto said threaded rod, and further comprise a driver (111) solid and coaxial with the hollow spindle and adapted to be made solid with the housing of the barrel spring, said spring being fixed at one end to the adjuster and its other end to the driver.

FIG. 1

FIG. 2

FIG. 3

1

FIG. 4

EP 0 236 371 B1

FIG. 5

24
25
26

FIG. 6

88'

88c

41

C

89

87

86

88

88a

85

B

88b

41a

**FIG. 7**

**FIG. 8**

**FIG. 9**

4

132

106

131

133

116

134

FIG. 10

135

90°

FIG. 11